# EUROPÄISCHE PATENTANMELDUNG

(11) **EP 3 848 255 A1**
(43) Veröffentlichungstag der Anmeldung: **14.07.2021**
(21) Anmeldenummer: 20150762.1
(22) Anmeldetag: 08.01.2020
(51) Int. Cl.: B60R 22/40, G01P 15/02

(54) **SENSORGEHÄUSE FÜR EINEN SENSOR ZUR DETEKTION VON BESCHLEUNIGUNGEN UND/ODER KIPPWINKELÄNDERUNGEN SOWIE EIN SENSOR MIT EINEM SOLCHEN SENSORGEHÄUSE**

(71) Anmelder: Illinois Tool Works Inc., Glenview, IL 60025 (US)
(72) Erfinder: Aslan, Eyüp, 30173 Hannover (DE); Wachlin, Kai, 24594 Hohenwestedt (DE); Budin, Martin, 31535 Neustadt (DE); Engel, Christian, 29693 Ahlden (DE)
(74) Vertreter: HGF

(57) **Zusammenfassung**

Erfindungsgemäß ist ein Sensorgehäuse (2) für einen Sensor (1) zur Detektion von Beschleunigungen und/oder Kippwinkeländerungen vorgesehen. Das Sensorgehäuse bildet eine Sensormulde (3) aus in der eine Sensorkugel (4) anordbar ist, wobei ein Sensorarm (5) zum Erfassen von Lageänderungen der Sensorkugel am Sensorgehäuse schwenkbar lagerbar ist, und wobei das Sensorgehäuse über einen Befestigungsabschnitt (7) mit einem Gurtaufroller für Rückhaltesysteme verbindbar ist. Die vorliegenden Erfindung zeichnet sich dadurch aus, dass die Sensormulde aus einem ersten Werkstoff ausgebildet ist, dessen E-Modul sich vom E-Modul eines zweiten Werkstoffes aus dem der Befestigungsabschnitt ausgebildet ist unterscheidet, so dass eine Übertragung von Körperschall von dem Sensorgehäuse an einen damit verbindbaren Gurtaufroller für Rückhaltesysteme gering ist.

## Beschreibung

Die vorliegende Erfindung betrifft ein Sensorgehäuse für einen Sensor zur Detektion von Beschleunigungen und/oder Kippwinkeländerungen sowie einen Sensor mit einem solchen Sensorgehäuse.

Ein solcher Sensor findet insbesondere Anwendung in Gurtaufrollern für Rückhaltesysteme bzw. in Gurtspulen für Sicherheitsgurte. Derartige Sensoren und Systeme werden auch als CS-Sensoren/-Systeme (car sensitive sensors/systems) bezeichnet und haben die Aufgabe, bei einer bestimmten Beschleunigung bzw. Verzögerung und/oder einer Kippwinkeländerung (Lageveränderung) eines Fahrzeuges einen Sicherheitsgurtaufroller zu verriegeln.

Wird eine bestimmte Ansprechschwelle überschritten, welche von der Geometrie, der Masse sowie der gegenseitigen Reibung der Sensorteile abhängt, so bewegt sich eine Kugel in einer Mulde des Sensorgehäuses aus einer Ruhelage heraus. Dabei wird ein Sensorarm ausgelenkt, sodass eine damit verbundene Steuerklinke in eine außenverzahnte Steuerscheibe einrastet. Diese ist begrenzt verdrehbar an eine Gurtspule angeschlossen. Die Steuerscheibe wird durch den Eingriff der Steuerklinke blockiert und bewirkt eine Blockierung eines Gurtbandabzuges.

Auch durch Erschütterungen im Fahrbetrieb wird die Kugel ausgelenkt und schlägt dabei an andere Sensorteile an, was Geräusche verursacht. Besonders bei Gurtaufrollern am Rücksitz eines Fahrzeuges und bei unter einer Hutablage angeordneten Gurtaufrollern, die in der Nähe des Gehörs der Fahrzeuginsassen angeordnet sind, können die so verursachten Geräusche als störend empfunden werden.

Da die Antriebe zunehmend leiser werden, z. B. durch die Abkehr von Brennkraftmaschinen, insbesondere bei der Elektromobilität ist die Geräuschkulisse im Fahrzeug so weit abgesenkt, dass selbst geringe Geräusche durch derartige Sensoren wahrnehmbar sind.

In der EP 0 528 230 B1 ist ein geräuschgedämpfter Sensor für einen Sicherheitsgurtroller offenbart.

Aus der EP 1 400 418 B1 geht eine Betätigungseinrichtung für einen Sperrmechanismus hervor.

Der Erfindung liegt daher die Aufgabe zugrunde, ein Sensorgehäuse sowie einen Sensor und auch einen Gurtstraffer mit einem solchen Sensor bereitzustellen, bei dem hörbare Eigengeräusche vermindert sind und der gleichzeitig kostengünstig herstellbar ist.

Die Aufgabe wird mit den Merkmalen der unabhängigen Patentansprüche 1, 8, 9 und 10 gelöst. Vorteilhafte Ausgestaltungen davon sind in den davon abhängigen Unteransprüchen angegeben.

Erfindungsgemäß ist ein Sensorgehäuse für einen Sensor zur Detektion von Beschleunigungen und/oder Kippwinkeländerungen vorgesehen. Das Sensorgehäuse bildet eine Sensormulde aus in der eine Sensorkugel anordbar ist, wobei ein Sensorarm zum Erfassen von Lageänderungen der Sensorkugel am Sensorgehäuse schwenkbar lagerbar ist, und wobei das Sensorgehäuse über einen Befestigungsabschnitt mit einem Gurtaufroller für Rückhaltesysteme verbindbar ist. Die vorliegenden Erfindung zeichnet sich dadurch aus, dass die Sensormulde aus einem ersten Werkstoff ausgebildet ist, dessen E-Modul sich vom E-Modul eines zweiten Werkstoffes aus dem der Befestigungsabschnitt ausgebildet ist unterscheidet, so dass eine Übertragung von Körperschall von dem Sensorgehäuse an einen damit verbindbaren Gurtaufroller für Rückhaltesysteme gering ist.

Unter einem Gurtaufroller für Rückhaltesysteme werden im Rahmen der vorliegenden Erfindung Gurtspulen für Sicherheitsgurte sowie als CS-Sensoren bzw. CS-Systeme (car sensitive -sensors/-systems) bezeichnete Bauteile verstanden.

Eigengeräusche eines Sensorgehäuses werden insbesondere als Körperschall im Fahrzeug übertragen und sind, je nach dem an welchem Ort das Sensorgehäuse in einem Fahrzeug angeordnet ist, deutlich bis sehr deutlich wahrnehmbar.

Derartige Sensorgehäuse müssen aufgrund von Sicherheitsanforderungen aus einem entsprechend eigensteifen Werkstoff hergestellt sein, wobei ein Werkstoff verwendet wird, der eine werkstoffbedingte Oberflächenrauigkeit besitzt, um eine ausreichende Traktion für ein Abrollen der Sensorkugel zu gewährleisten.

Sensorgehäuse werden üblicherweise aus einem einzigen Werkstoff (1K-Bauteil (EinKomponenten-Bauteil), wie z.B. einem thermoplastischen Elastomer (TPE) oder aus Polyoxymethylen (POM), im Spritzgussverfahren hergestellt. Insbesondere das häufig zur Herstellung von Sensorgehäusen verwendete Polyoxymethylen (POM) überträgt Körperschall besonders gut.

Die Erfinder der vorliegenden Erfindung haben erkannt, dass durch Ausbildung der Sensormulde aus einem ersten Werkstoff, dessen E-Modul sich vom E-Modul eines zweiten Werkstoffes, aus dem der Befestigungsabschnitt ausgebildet ist, unterscheidet, eine Übertragung von Körperschall von dem Sensorgehäuse an einen damit verbindbaren Gurtaufroller für Rückhaltesysteme gering ist. Das erfindungsgemäße Sensorgehäuse ist im Gegensatz zu den aus dem Stand der Technik bekannten Sensorgehäusen, die aus einem einzigen Werkstoff (1K-Bauteil) ausgebildet sind, aus zwei unterschiedlichen Werkstoffen (2K-Bauteil (ZweiKomponenten-Bauteil)) ausgebildet.

Durch einen ausreichenden Abstand der E-Moduli des ersten und des zweiten Werkstoffes ist eine Entkoppelung und somit eine zuverlässige Verringerung der Übertragung von Körperschall möglich.

Insbesondere bewirkt das erfindungsgemäße Sensorgehäuse eine Verminderung der Geräuschbelästigung und verhindert ein sogenanntes "Rasseln" welches bei aus dem Stand der Technik bekannten Sensoren auftritt.

Erfindungsgemäß kann vorgesehen sein, dass der E-Modul des ersten Werkstoffes, vorzugsweise ein thermoplastischer Elastomer (TPE) und insbesondere ein thermoplastischer Polyester Elastomer (TPC-ET), aus dem die Sensormulde ausgebildet ist, eine geringeren Wert aufweist, als der E-Modul des zweiten Werkstoffes, vorzugsweise ein Polyoxymethylen (POM), aus dem der Befestigungsabschnitt ausgebildet ist.

Durch eine erfindungsgemäße Ausbildung des Sensorgehäuses wird durch die gute Tieftemperaturzähigkeit des Werkstoffes aus dem die Sensormulde ausgebildet ist ein Sensor mit verbesserten Eigenschaften bereitgestellt.

Diese betreffen die verbesserten Laufeigenschaften, hervorgerufen durch den Werkstoff aus dem die Sensormulde ausgebildet ist, wodurch das Ansprechverhalten des Sensors verbessert wird. Zudem spielen Alterungsprozesse aufgrund des verwendeten Materials eine untergeordnete Rolle, sodass ein nahezu gleichbleibendes Ansprechverhalten des Sensors über die Zeit erreicht wird.

Durch die Ausbildung der Sensormulde aus TPC-EP ist ein geeigneter Reibkoeffizient zur Lagerung einer Sensorkugel vorhanden. Die verbesserten Materialeigenschaften gegenüber dem aus dem Stand der Technik bekannten Sensorgehäusen betreffen unter anderem eine bessere Dämpfung der Sensorkugel und die Laufeigenschaften der Sensorkugel. Zudem wird eine Versprödung des Werkstoffes vermieden.

Das Sensorgehäuse kann einen Anbindungsbereich aufweisen, über den die Sensormulde mit dem Befestigungsabschnitt in einem Verbindungsbereich verbunden ist, wobei diese Verbindung durch ein Spritzgussverfahren hergestellt ist, bei dem auf den Anbindungsbereich der im Spritzgussverfahren aus dem ersten Werkstoff hergestellten Sensormulde der Befestigungsabschnitt aus dem zweiten Werkstoff im Spritzgussverfahren aufgebracht ist.

Insbesondere moderne Kunststofffertigungsverfahren, bei denen unterschiedliche Kunststoffarten in einer oder zwei Formen zu einem Bauteil ausgebildet werden können, sind hierbei vorteilhaft, um die Werkstoffen entsprechend einsetzen zu können. Beispielsweise kann zunächst das erste Werkstoff des Sensorgehäuses gefestigt und dann partiell mit dem zweiten Werkstoff des Befestigungsabschnitte umspritzt werden.

Darüber hinaus ist es möglich, die Werkstoffen in einer Form so auszuformen, dass die Werkstoffen über geeignete Eingriffsmittel ineinander eingreifen.

Der Befestigungsabschnitt und der Anbindungsbereich des Sensorgehäuses können im Verbindungsbereich miteinander korrespondierende Eingriffsmittel, vorzugsweise Hinterschnitte, aufweisen, die einen Formschluss des Anbindungsbereiches mit dem Befestigungsabschnitt bewirken.

Die Sensormulde kann im Anbindungsbereich eine dreidimensionale Struktur ausbilden, die den oder die Eingriffsmittel aufweist, wobei der Befestigungsabschnitt im Verbindungsbereich zu dieser dreidimensionalen Struktur entsprechend korrespondierend ausgebildet ist, sodass der zweite Werkstoff des Befestigungsabschnittes den ersten Werkstoff der Sensormulde umgibt, wobei die dreidimensionale Struktur vorzugsweise eine oder mehrere scheibenartige Elemente und/oder ein strukturiertes kugelartiges Element ist.

Geeignete Eingriffsmittel sind beispielsweise Hinterschnitte, insbesondere Hinterschnitte nach Art von Schwalbenschwänzen oder T-Nut-Verbindungen oder dergleichen geformte Hinterschnitte, die gewährleisten, dass ein Bauteil an dem anderen Bauteil in alle drei Raumachsen durch einen entsprechenden Werkstoffformschluss fixiert ist.

Die Sensormulde kann eine dreidimensionale Vertiefung aufweisen, wobei Seitenflächen der Vertiefung als schiefe Ebene oder konkave Flächen ausgebildet sind und wobei ein Bereich in dem die Sensorkugel aufnehmbar ist und in einer Ruheposition aufliegt, als eine Pfanne bzw. Kugelkalotte ausgebildet, aus deren tiefstem Punkt die Sensorkugel durch Roll- oder Gleitbewegungen in eine höhere Position überführbar ist.

Der Befestigungsabschnitt kann Befestigungselemente, wie z.B. Rastelemente, zum Verbinden mit einem Gurtaufroller für Rückhaltesysteme aufweisen.

Gemäß einer alternativen Ausführungsform kann auch vorgesehen sein, dass der Befestigungsabschnitt als ein separates Bauteil ausgebildet ist.

Weiterhin ist erfindungsgemäß ein Sensor zur Detektion von Beschleunigungen und/oder Kippwinkeländerungen vorgesehen. Dieser umfasst das vorstehend erläuterte Sensorgehäuse, wobei eine Sensorkugel die in der Sensormulde gelagert ist, und einen Sensorarm zum Erfassen von Lageänderungen der Sensorkugel, der am Sensorgehäuse schwenkbar gelagert ist oder flexibel ausgebildet ist, und der bei einer Bewegung der Sensorkugel aus einer stabilen Lage über dem tiefsten Punkt der Sensormulde entsprechend ausgelenkt wird.

Ein solcher Sensor weist die an Hand des Sensorgehäuses beschriebenen Vorteile auf.

Zudem ist ein Gurtaufroller für Rückhaltesysteme mit einem solchen Sensor vorgesehen, wobei das Sensorgehäuse über die Befestigungsmittel des Befestigungsabschnittes mit dem Gurtaufroller für Rückhaltesysteme verbunden ist.

Gemäß einem erfindungsgemäßen Verfahren ist das Sensorgehäuse durch ein Spritzgussverfahren hergestellt bei dem zunächst eine Sensormulde spritzgegossen wird und im Anschluss daran, durch ein Spritzgussverfahren, ein Befestigungsabschnitt auf einen Anbindungsbereich der Sensormulde aufgebracht wird.

Die Erfindung wird im Folgenden anhand eines in den Figuren dargestellten Ausführungsbeispiels näher erläutert. Diese zeigen in:
- Figur 1: eine schematische Seitenansicht eines aus dem Stand der Technik bekannten Sensors zur Detektion von Beschleunigungen und/oder Kippwinkeländerungen,
- Figur 2: eine seitlich geschnittene Darstellung eines erfindungsgemäßen Sensors zur Detektion von Beschleunigungen und/oder Kippwinkeländerungen,
- Figur 3: eine seitlich geschnittene Darstellung eines Anbindungsbereiches und eines Befestigungsabschnittes des erfindungsgemäßen Sensor gemäß einem ersten Ausführungsbeispiel,
- Figur 4: eine seitlich geschnittene Darstellung einer Sensormulde des erfindungsgemäßen Sensorgehäuses mit Anbindungsbereich,
- Figur 5: eine seitlich geschnittene Darstellung des Befestigungsabschnittes des erfindungsgemäßen Sensorgehäuses,
- Figur 6: eine Seitenansicht des erfindungsgemäßen Sensorgehäuses gemäß einem zweiten Ausführungsbeispiel,
- Figur 7: eine perspektivische Darstellung des erfindungsgemäßen Sensorgehäuses, insbesondere des Anbindungsbereichs ohne Befestigungsabschnitt, gemäß dem Zweiten Ausführungsbeispiel,
- Figur 8: eine seitliche Darstellung des erfindungsgemäßen Sensorgehäuses aus Figur 6 mit Schnittlinien entlang der Linien A - A, B - B und C - C,
- Figur 9: eine geschnittene Darstellung des erfindungsgemäßen Sensorgehäuses aus Figur 8 geschnitten entlang der Linie A - A,
- Figur 10: eine geschnittene Darstellung des erfindungsgemäßen Sensorgehäuses aus Figur 8 geschnitten entlang der Linie B - B, und
- Figur 11: eine geschnittene Darstellung des erfindungsgemäßen Sensorgehäuses aus Figur 8 geschnitten entlang der Linie C - C.

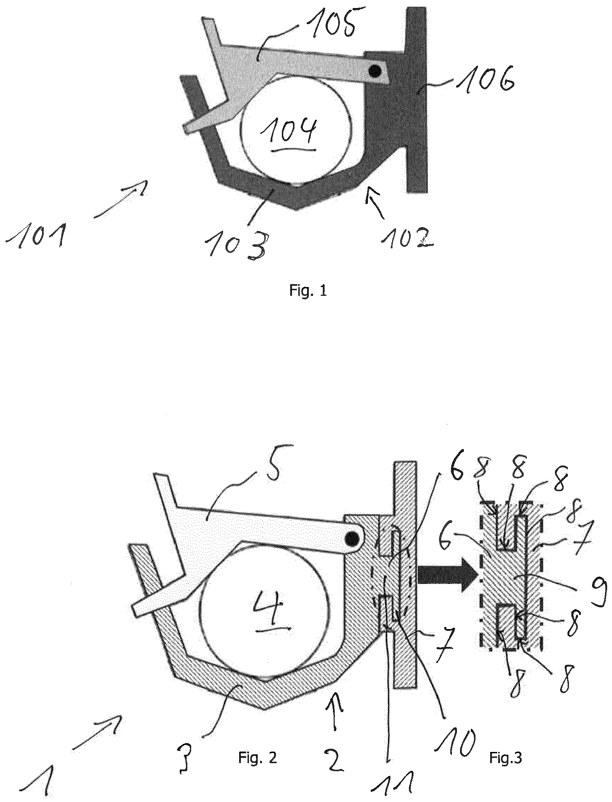

Ein aus dem Stand der Technik bekannter Sensor 101 umfasst ein Sensorgehäuse 102 mit einer darin ausgebildeten Sensormulde 103 (Fig. 1). Die Sensormulde 103 weist eine dreidimensionale Vertiefung auf.

Der Boden der Sensormulde 103 ist als eine Pfanne beziehungsweise Kugelkalotte ausgebildet, aus der eine Sensorkugel 104 durch Roll- oder Gleitbewegungen in eine höhere Position überführt wird. In der Sensormulde 103 ist die Sensorkugel 104 gelagert. Das Sensorgehäuse 102 weist einen Befestigungsbereich 106 auf über den der Sensor 101 mit einem Gurtaufroller für Rückhaltesysteme (nicht dargestellt) verbindbar ist. Weiterhin ist im Bereich des Befestigungsbereich 106 ein Sensorarm 105 beweglich gelagert. Der Sensorarm 105 ruht in einer Ausgangsstellung auf der Sensorkugel 104.

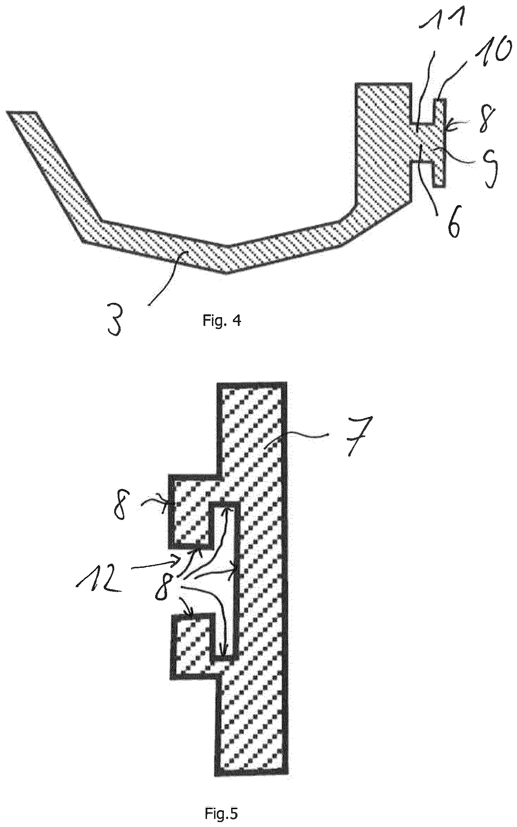

Ein erfindungsgemäßer Sensor 1 wird im Folgenden anhand eines ersten Ausführungsbeispiels näher beschrieben (Figuren 2 bis 5).

Der erfindungsgemäße Sensor 1 umfasst ein Sensorgehäuse 2. Das Sensorgehäuse 2 bildet eine Sensormulde 3 aus. Die Sensormulde 3 weist eine dreidimensionale Vertiefung auf, deren tiefster Punkt als Mittelpunktlage einer Sensorkugel 4 (seismische Masse) bezeichnet wird und eine Ruhelage der Sensorkugel 4 darstellt. Die Seitenflächen der Vertiefung können als schiefe Ebene oder konkave Flächen ausgebildet sein. Vorzugsweise ist der Bereich in dem die Sensorkugel 4 in der Vertiefung aufliegt als eine Pfanne beziehungsweise Kugelkalotte ausgebildet, aus der die Sensorkugel 4 durch Roll- oder Gleitbewegung in eine höhere Position überführt wird.

Die Sensorkugel 4 ist somit in der Sensormulde 3 gelagert. Am Sensorgehäuse 2 ist der Sensorarm 5 entweder schwenkbar gelagert oder derart flexibel ausgebildet, dass dieser bei einer Bewegung der Sensorkugel 4 aus einer stabilen Lage über einem tiefsten Punkt der Sensormulde 3 ausgelenkt wird. Der Sensorarm 5 ist somit zum Erfassen von Lageänderungen der Sensorkugel 4 ausgebildet.

Durch eine Lageänderung der Sensorkugel 4 wird der Sensorarm 5 angehoben beziehungsweise ausgelenkt, sodass eine damit verbundene Steuerklinke in eine außenverzahnte Steuerscheibe einrastet. Diese ist begrenzt verdrehbar an eine Gurtspule angeschlossen. Die Steuerscheibe wird durch den Eingriff der Steuerklinke blockiert und bewirkt eine Blockierung eines Gurtbandabzuges. Theoretisch kann an Stelle dieser Mechanik der Sensorarm auch ein elektronisches Signal auslösen um eine gurtspule zu blockieren.

Das Sensorgehäuse 2 bildet einen Anbindungsbereich 6 aus. Über diesen Anbindungsbereich 6 ist die Sensormulde 3 mit einem Befestigungsabschnitt 7 in einem Verbindungsbereich 8 verbunden.

Der Anbindungsbereich 6 des Sensorgehäuses 2 ist im vorliegenden Ausführungsbeispiel als eine dreidimensionale Struktur 9 ausgebildet, die ein scheibenförmiges Element 10 und einen Steg 11 umfasst, wobei das scheibenförmige Element 10 über den Steg 11 mit der Sensormulde 3 verbunden ist.

Im vorliegenden Ausführungsbeispiel ist die Sensormulde 3 aus einem thermoplastischen Elastomer (TPE) und insbesondere aus einem thermoplastischen Polyester-Elastomer (TPC-ET) ausgebildet.

Eine Mantelfläche des scheibenförmigen Elements 10 und des Steges 11 sowie des daran angrenzenden Bereichs des Anbindungsbereichs wird als der Verbindungsbereich 8 bezeichnet.

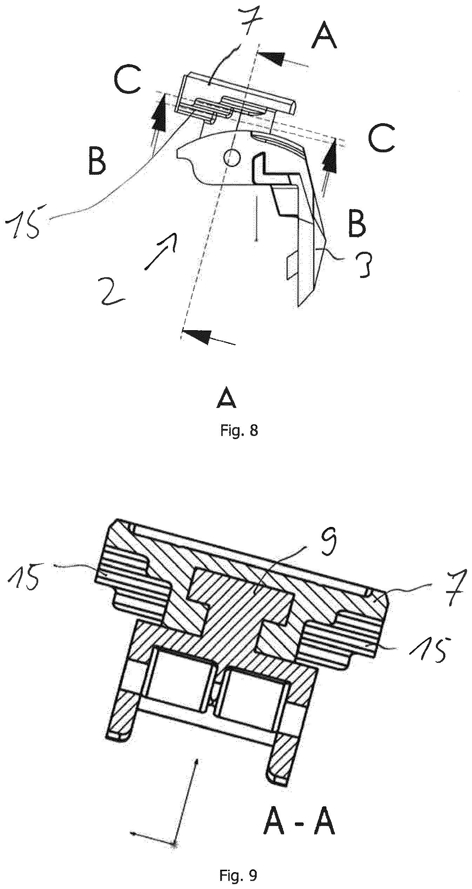

Der Befestigungsabschnitt 7 weist eine korrespondierend zur geometrischen Figur 9 ausgebildete Befestigungsausnehmung 12 auf. Die Oberfläche der Befestigungsausnehmung 12 bildet ebenfalls den Verbindungsbereich 8 aus.

Der Befestigungsabschnitt 7 ist aus Polyoxymethylen (POM) ausgebildet.

Der E-Modul des ersten Werkstoffes beziehungsweise des thermoplastischen Polyester-Elastomers (TPC-ET) aus dem die Sensormulde 3 ausgebildet ist, weist einen geringeren E-Modul auf als der E-Modul des zweiten Werkstoffes bzw. des Polyoxymethylens (POM) aus dem der Befestigungsbereich ausgebildet ist.

Am Befestigungsabschnitt 7 sind Rastelemente (nicht dargestellt) vorgesehen über die der Sensor mit einem Gurtaufroller für Rückhaltesysteme (nicht dargestellt) durch einfaches einschieben beziehungsweise durch einfaches Einklicken verbunden werden kann. Anstelle der Rastmittel kann alternativ auch eine Befestigung über mehrere Stifte (Pins) vorzugsweise vier vorgesehen werden, wobei dann im Befestigungsabschnitt 7 anstelle der Rastelemente entsprechende Ausnehmungen beziehungsweise Bohrungen vorgesehen sind.

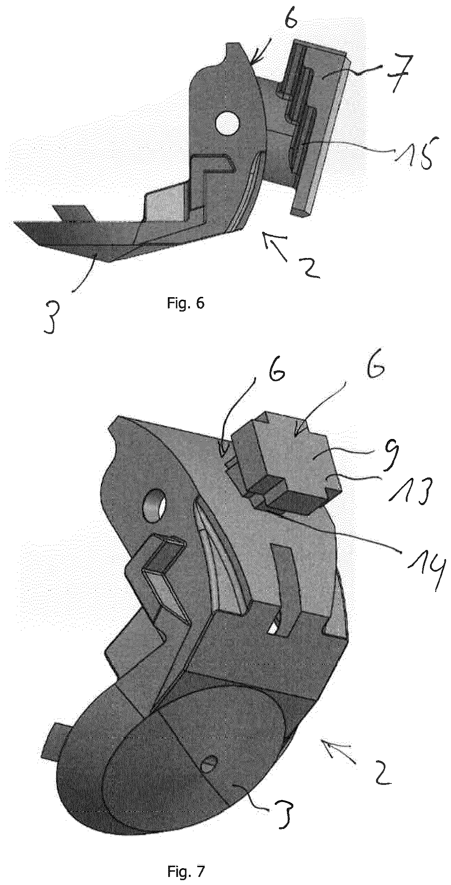

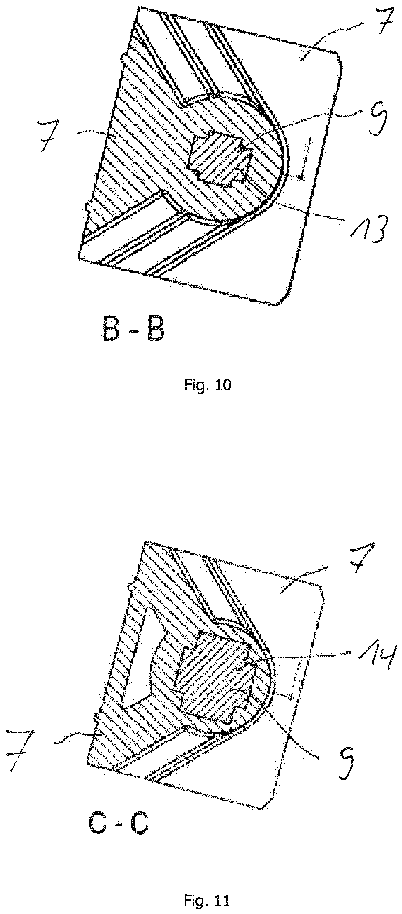

Im Folgenden wird der erfindungsgemäße Sensor 1 anhand eines zweiten Ausführungsbeispiels erläutert (Figuren 6 bis 11). Sofern nichts anderes Beschrieben ist entspricht das zweite Ausführungsbeispiel dem vorstehend beschriebenen ersten Ausführungsbeispiel und weist entsprechend dieselben technischen Merkmale auf. Gleiche Merkmale sind mit den gleichen Bezugszeichen versehen.

Gemäß dem zweiten Ausführungsbeispiel ist die geometrische Struktur 9 aus zwei dreidimensionalen Kreuzstrukturen ausgebildet, wobei die größere kreuzförmige Struktur 13 über die kleinere kreuzförmige Struktur 14 den Anbindungsbereich 6 ausbildet. Die Strukturen 13, 14 sind einstückig an der Sensormulde 3 angeformt und aus demselben Werkstoff wie die Sensormulde ausgebildet.

Durch diese beiden Strukturen 13, 14 sind entlang einer jeden der drei Achsen im Raum Hinterschnitte ausgebildet. Diese Hinterschnitte bewirken einen Formschluss mit dem in diesem Bereich durch ein Spritzgussverfahren angeformten Befestigungsabschnitt 7.

Der Befestigungsabschnitt 7 weist dementsprechend eine zu den beiden Strukturen 13, 14 korrespondierend ausgebildete Befestigungsausnehmung 12 auf.

Weiterhin sind am Befestigungsabschnitt 7 drei stufige Rastelemente 15 in Form von nut-und federartigen Strukturen ausgeformt. Über diese Rastelemente 15 ist der Sensor 1 mit einem Gurtaufroller für Rückhaltesysteme (nicht dargestellt) verbindbar.

Zudem ist erfindungsgemäß ein Gurtaufroller für Rückhaltesysteme mit einem vorstehend beschriebenen Sensorgehäuse vorgesehen. Das Sensorgehäuse ist über die Befestigungsmittel beziehungsweise die Rastelemente mit dem Gehäuse des Gurtaufrollers verbunden. Der Sensorarm ist dabei mit einer Steuerklinke verbunden, die in einer außen verzahnte Steuerscheibe des Gurtaufrollers eingreift. Diese ist begrenzt verdrehbar an eine Gurtspule angeschlossen. Die Steuerscheibe wird durch den Eingriff der Steuerklinke blockiert und bewirkt eine Blockierung eines Gurtbandabzuges (nicht dargestellt).

Das erfindungsgemäße Sensorgehäuse ist durch ein Spritzgussverfahren hergestellt, bei dem zunächst die Sensormulde mit Befestigungsabschnitt und der einstückig daran angeformten geometrischen Struktur spritzgegossen wird, wobei im Anschluss daran, ebenfalls durch ein Spritzgussverfahren, der Befestigungsabschnitt 7 im Verbindungsbereich 8 aufgebracht wird.

Gemäß einer Alternativen aber nicht bevorzugten Ausführungsform kann der Befestigungsabschnitt auch als ein separates Bauteil ausgeführt sein, wobei die vorstehend beschriebenen Materialeigenschaften analog vorhanden sind. Zudem kann zwischen dem Anbindungsbereich der Sensormulde und dem Befestigungsabschnitt auch eine Folie oder der gleichen zur Schallentkopplung vorgesehen sein.

### Bezuaszeichenliste:

- 101: Sensor
- 102: Sensorgehäuse
- 103: Sensormulde
- 104: Sensorkugel
- 105: Sensorarm
- 106: Befestigungsbereich

- 1: Sensor
- 2: Sensorgehäuse
- 3: Sensormulde
- 4: Sensorkugel
- 5: Sensorarm
- 6: Anbindungsbereich
- 7: Befestigungsabschnitt
- 8: Verbindungsbereich
- 9: Geometrische Struktur
- 10: Scheibenförmiges Element
- 11: Steg
- 12: Befestigungsausnehmung
- 13: Große kreuzförmige Struktur
- 14: Kleine kreuzförmige Struktur
- 15: Rastelement

## Patentansprüche

1. Sensorgehäuse für einen Sensor (1) zur Detektion von Beschleunigungen und/oder Kippwinkeländerungen, wobei das Sensorgehäuse (2) eine Sensormulde (3) ausbildet in der eine Sensorkugel (4) anordbar ist, und wobei ein Sensorarm (5) zum Erfassen von Lageänderungen der Sensorkugel (4) am Sensorgehäuse (2) schwenkbar lagerbar ist, und wobei das Sensorgehäuse (2) über einen Befestigungsabschnitt (7) mit einem Gurtaufroller für Rückhaltesysteme verbindbar ist,
**dadurch gekennzeichnet,**
**dass** die Sensormulde (3) aus einem ersten Werkstoff ausgebildet ist, dessen E-Modul sich vom E-Modul eines zweiten Werkstoffes aus dem der Befestigungsabschnitt (7) ausgebildet ist unterscheidet, so dass eine Übertragung von Körperschall von dem Sensorgehäuse (2) an einen damit verbindbaren Gurtaufroller für Rückhaltesysteme gering ist.

2. Sensorgehäuse gemäß Anspruch 1,
**dadurch gekennzeichnet,**
**dass** der E-Modul des ersten Werkstoff, vorzugsweise ein thermoplastischer Elastomer (TPE) und insbesondere ein thermoplastischer Polyester Elastomer (TPC-ET), aus dem die Sensormulde (3) ausgebildet ist, eine geringeren Wert aufweist, als der E-Modul des zweiten Werkstoffes, vorzugsweise ein Polyoxymethylen (POM), aus dem der Befestigungsabschnitt (7) ausgebildet ist.

3. Sensorgehäuse gemäß Anspruch 1 oder 2,
**dadurch gekennzeichnet,**
**dass** das Sensorgehäuse (2) einen Anbindungsbereich (6) aufweist, über den die Sensormulde (3) mit dem Befestigungsabschnitt (7) in einem Verbindungsbereich (8) verbunden ist, wobei diese Verbindung durch ein Spritzgussverfahren hergestellt ist, bei dem auf den Anbindungsbereich (6), der im Spritzgussverfahren aus dem ersten Werkstoff hergestellten Sensormulde (3) der Befestigungsabschnitt (7) aus dem zweiten Werkstoff im Spritzgussverfahren aufgebracht ist.

4. Sensorgehäuse nach einem der Ansprüche 1 bis 3,
**dadurch gekennzeichnet,**
**dass** der Befestigungsabschnitt (7) und der Anbindungsbereich (6) des Sensorgehäuses im Verbindungsbereich (8) miteinander korrespondierende Eingriffsmittel (10, 11, 12, 13, 14), vorzugsweise Hinterschnitte, aufweisen, die einen Formschluss des Anbindungsbereiches (6) mit dem Befestigungsabschnitt (7) bewirken.

5. Sensorgehäuse nach einem der Ansprüche 1 bis 4,
**dadurch gekennzeichnet,**
**dass** die Sensormulde (3) im Anbindungsbereich (6) eine dreidimensionale Struktur (9) ausbildet, die das oder die Eingriffsmittel (10, 11, 13, 14) aufweist, wobei der Verbindungsbereich (8, 12) des Befestigungsabschnittes zu dieser geometrischen Struktur entsprechend korrespondierend ausgebildet ist, sodass das zweite Werkstoff des Befestigungsabschnittes (7) den ersten Werkstoff der Sensormulde (3) umgibt, wobei die dreidimensionale Struktur (9) vorzugsweise eine oder mehrere scheibenartige Elemente (11, 12) und/oder ein strukturiertes kugelartiges Element (13, 14) ist.

6. Sensorgehäuse nach einem der Ansprüche 1 bis 5,
**dadurch gekennzeichnet,**
**dass** die Sensormulde (3) eine dreidimensionale Vertiefung aufweist, wobei Seitenflächen der Vertiefung als schiefe Ebene oder konkave Flächen ausgebildet sind und wobei ein Bereich in dem eine Sensorkugel (4) aufnehmbar ist und in einer Ruheposition aufliegt, als eine Pfanne bzw. Kugelkalotte ausgebildet, aus deren tiefstem Punkt die Sensorkugel (4) durch Roll- oder Gleitbewegungen in eine höhere Position überführbar ist.

7. Sensorgehäuse nach einem der Ansprüche 1 bis 6,
**dadurch gekennzeichnet,**
**dass** der Befestigungsabschnitt (7) Befestigungsmittel (15), vorzugsweise Rastelemente, zum Verbinden mit einem Gurtaufroller für Rückhaltesysteme aufweist.

8. Sensorgehäuse gemäß Anspruch 1,
**dadurch gekennzeichnet,**
**dass** der Befestigungsabschnitt (7) als ein separates Bauteil ausgebildet ist.

9. Sensor zur Detektion von Beschleunigungen und/oder Kippwinkeländerungen umfassend,
ein Sensorgehäuse (2) gemäß einem der Ansprüche 1 bis 7, wobei
eine Sensorkugel (4) die in der Sensormulde (3) gelagert ist,
einen Sensorarm (5) zum Erfassen von Lageänderungen der Sensorkugel (4), der am Sensorgehäuse (2) schwenkbar gelagert ist oder flexibel ausgebildet ist, und der bei einer Bewegung der Sensorkugel (4) aus einer stabilen Lage über einem tiefsten Punkt der Sensormulde (3) entsprechend ausgelenkt wird.

10. Gurtaufroller für Rückhaltesysteme mit einen Sensor gemäß Anspruch 8,
wobei das Sensorgehäuse (2) über die Befestigungsmittel (15) des Befestigungsabschnittes (7) mit dem Gurtaufroller für Rückhaltesysteme verbunden ist.

11. Sensorgehäuse gemäß einem der Ansprüche 1 bis 7,
hergestellt durch ein Spritzgussverfahren bei dem zunächst eine Sensormulde (3) spritzgegossen wird und im Anschluss daran, durch ein Spritzgussverfahren, ein Befestigungsabschnitt (7) auf einen Anbindungsbereich (6) der Sensormulde (3) aufgebracht wird.
